# EUROPEAN PATENT SPECIFICATION

(11) **EP 1 365 559 B1**
(45) Date of publication and mention of the grant of the patent: **23.08.2006**
(21) Application number: 03252818.4
(22) Date of filing: 06.05.2003
(51) Int. Cl.: H04L 29/06

(54) **Exchanging data using public key encryption**
Austauschdaten unter Verwendung einer Verschlüsselung mit öffentlichem Schlüssel
Echange de données utilisant un chiffrage à clé publique

(30) Priority: 13.05.2002 US 145328
(43) Date of publication of application: 26.11.2003
(73) Proprietor: Hewlett-Packard Company, Palo Alto, CA 94304 (US)
(72) Inventor: Khieu, Andrew K., Granite Bay, CA 95746 (US); Robinson, Mike, Roseville, CA 95747 (US); Volkoff, Brian, Rocklin, CA 95765 (US)
(74) Representative: Powell, Stephen David

(56) References cited:
- WO-A-01/24444
- US-A- 5 970 142
- US-A- 6 044 468
- US-B1- 6 314 521

## Description

The present invention relates generally to data exchanges over network media. In particular, the invention relates to a method and system for providing encrypted configuration data exchanges over insecure networks.

Wireless 802.11 networks use WEP (Wired Equivalent Privacy) encryption to ensure the privacy of its data exchanges. In such networks, a WEP key is shared confidentially between a mobile station and an associating access point. During initial configuration, network management tools provide WEP key data to 802.11 peripherals in plain text via communications over the wireless network. However, such systems do not accommodate the programming of WEP keys in cipher text by network configuration managers. Consequently, hackers are given the opportunity to sniff the wireless data exchanges and identify WEP keys from initial network configuration activities. Once these WEP keys are compromised, sensitive data exchanges risk interception.

In order to gain network access, network peripherals must authenticate themselves using a username/password or other credential. During the initial configuration process, some network configuration managers provide such data to some of their out of the box network peripherals in plain text over exposed networks. These networks do not accommodate the programming by network configuration managers of the network authentication data in cipher text. Consequently, if the authentication data that is provided in plain text is compromised, hackers may be given the opportunity to illegally gain network access.

Before network peripherals can utilize SNMPv3 authentication and encryption services, they must initially configure an SNMPv3 account with the appropriate hashing and encryption keys. Currently available systems do not allow configuration managers to configure an initial SNMPv3 account in cipher text. As a result, when encryption keys are communicated in plain text over ordinary network channels, these communications are exposed, giving hackers the opportunity to intercept them and compromise subsequent data exchanges.

In the past, if network configuration managers wanted to protect their initial configuration data, they could only do so in secure, closed, network environments. Generally, such environments are only available at centralized locations for big corporations. Such methods are inconvenient because network peripherals must be shipped to various locations prior to their use. Alternately, network configuration managers may configure individual peripherals in a point to point manner (which is a time consuming process), or take their chances implementing the initial configuration on an open network, utilizing plain text communications. While utilizing plain text communications on an open network is the riskiest alternative, many network configuration managers elect to do so and unintentionally compromise their network security.

WO 01/24444 discloses a method and system for initializing an SNMP agent.

According to an aspect of the present invention, there is provided a method according to claim 1.

The accompanying drawings, which are incorporated in and form a part of this specification, illustrate embodiments of the invention and, together with the description, serve to explain the principles of the invention:
Figure 1 is a block diagram showing network components in accordance with one embodiment of the present invention.
Figure 2 is a data flow diagram which illustrates data exchanges between network devices according to one embodiment of the present invention.
Figure 3 is a flowchart of steps performed by a security conscious network peripheral according to one embodiment of the present invention.
Figure 4 is a flowchart showing the steps performed by a remote SNMP (Simple Network Management Protocol) tool according to one embodiment of the present invention.
Figure 5 is a block diagram of an embodiment of an exemplary computer system used in accordance with the present invention.

Reference will now be made in detail to the preferred embodiments of the invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the scope of the invention as defined by the appended claims. Furthermore, in the following detailed description of the present invention, numerous specific details are set forth in order to provide a thorough understanding of the present invention. In other instances, well-known methods, procedures, components, structures and devices have not been described in detail so as to avoid unnecessarily obscuring aspects of the present invention.

### NOTATION AND NOMENCLATURE

Some portions of the detailed descriptions which follow are presented in terms of procedures, logic blocks, processing, and other symbolic representations of operations on data bits within a computer system or electronic computing device. These descriptions and representations are the means used by those skilled in the data processing arts to most effectively convey the substance of their work to others skilled in the art. A procedure, logic block, process, etc., is herein, and generally, conceived to be a self-consistent sequence of steps or instructions leading to a desired result. The steps are those requiring physical manipulations of physical quantities. Usually, though not necessarily, these physical manipulations take the form of electrical or magnetic signals capable of being stored, transferred, combined, compared, and otherwise manipulated in a computer system or similar electronic computing device. For reasons of convenience, and with reference to common usage, these signals are referred to as bits, values, elements, symbols, characters, terms, numbers, or the like with reference to the present invention.

It should be borne in mind, however, that all of these terms are to be interpreted as referencing physical manipulations and quantities and are merely convenient labels and are to be interpreted further in view of terms commonly used in the art. Unless specifically stated otherwise as apparent from the following discussions, it is understood that throughout discussions of the present invention, discussions utilizing terms such as "generating" or "receiving" or "retrieving" or the like, refer to the action and processes of a computer system, or similar electronic computing device, that manipulates and transforms data. For example, the data is represented as physical (electronic) quantities within the computer system's registers and memories and is transformed into other data similarly represented as physical quantities within the computer system memories or registers or other such information storage, transmission, or display devices.

### EXCHANGING DATA OVER NETWORKS

According to exemplary embodiments of the present invention, a security conscious peripheral can automatically generate a public/private key pair that may be used to protect the privacy of sensitive network configuration parameters that are exposed during the peripherals initial setup. The security conscious peripheral may thereafter make the public key available to network management tools through SNMP OID (Simple Network Management Protocol Object Identification) procedures. A remote SNMP (Simple Network Management Protocol) management tool may retrieve the public key and use it to encrypt sensitive data payloads prior to any SNMPv1, SNMPv2, configuration data exchanges.

In addition, the method and system of the present invention provides a generic way to expose a peripheral's public key to any network configuration manager present in a network. According to one embodiment, subsequent data exchanges with the configuration manager may thereafter be conducted in encrypted cipher text exchanges instead of plain text exchanges like that of the initial key exposure. Consequently, network configuration managers do not have to worry about exposing their sensitive network configuration parameters to possible sniffer interception on the open network.

### EXEMPLARY NETWORK IN ACCORDANCE WITH EMBODIMENTS OF THE PRESENT INVENTION

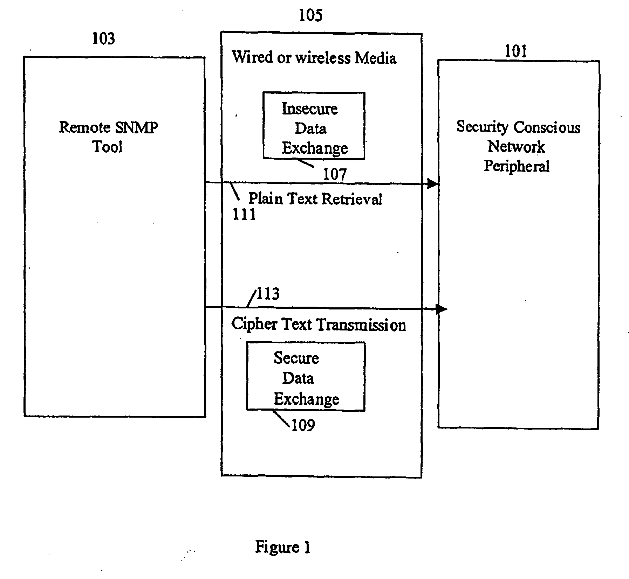

Figure 1 is a block diagram showing network components in accordance with one embodiment of the present invention. Referring to Figure 1, there is shown security conscious network peripheral 101, remote SNMP (Simple Network Management Protocol) tool 103, wire or wireless media 105, insecure data exchange 107, secure data exchange 109, plain text retrieval 111, and cipher text transmission 113.

Network peripheral 101 (e.g., wireless printer etc.), may constitute any peripheral network device according to exemplary embodiments of the present invention. According to such embodiments, in order to protect the privacy of sensitive network configuration parameters during initial setup, a security-conscious peripheral (e.g., network peripheral 101) may automatically generate (e.g., create) a public/private key pair during its startup. According to one embodiment, it may then make the public key available to network management tools (e.g., 103) by SNMP (Simple Network Management Protocol) OID (Object Identification) through either wired or wireless media 105. It should be appreciated that such communications may represent insecure data exchanges 107 to the extent that they involve plain text transmissions.

Remote SNMP management tool 103 may retrieve the public key from a network peripheral 101 using plain text retrieval 111. The key may be generated by network peripheral 101 and used by SNMP management tool to encrypt sensitive data payloads prior to any SNMPv1 or SNMPv2 configuration data exchanges. After the encryption, the data is communicated to the security conscious network peripheral 101 in a secure data exchange 109 via cipher text transmission 113.

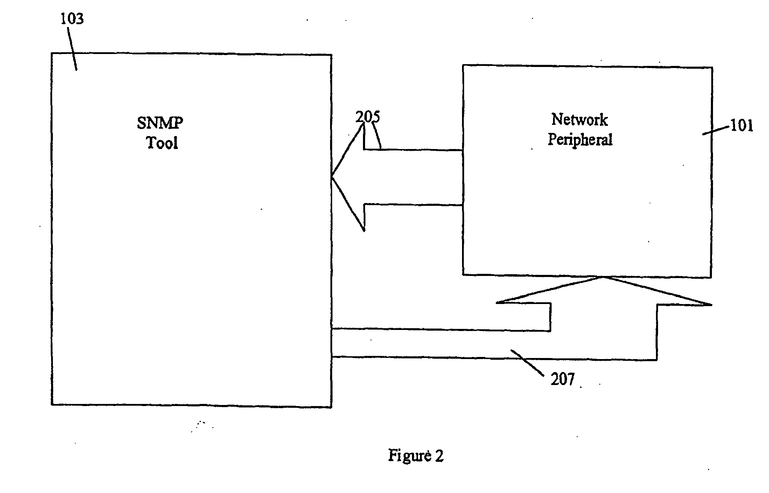

Figure 2 is a data flow diagram which illustrates data exchanges between network devices according to one embodiment of the present invention. Figure 2 shows security conscious network peripheral 101, remote SNMP tool 103 and data exchanges 205 and 207. In response to a security conscious network peripheral 101 generation of a public/private key pair, remote SNMP tool 103 retrieves the public key in data exchange 205. The public key is transmitted to the SNMP tool 103 in plain text. After the retrieval of the public key in data exchange 205, the remote SNMP tool 103 encrypts sensitive configuration data with the retrieved public key and communicates this information to the security conscious network 101 in data exchange 207. Data exchange 207 is then executed using cipher text encryption methods, with the data exchange 207 being retrieved and decrypted by network peripheral 101.

### EXEMPLARY OPERATIONS IN ACCORDANCE WITH EMBODIMENTS OF THE PRESENT INVENTION

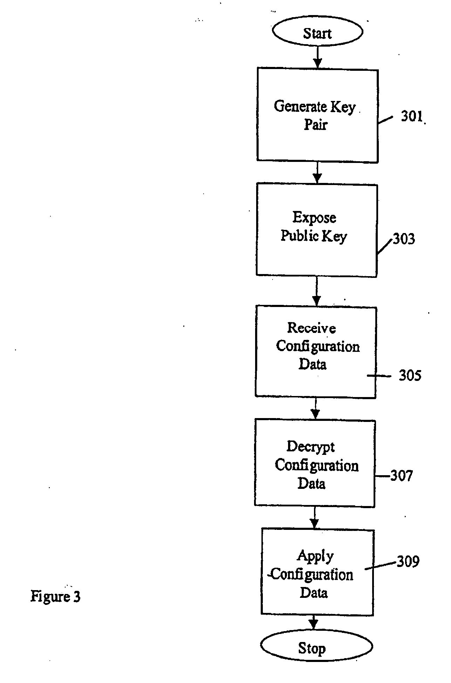

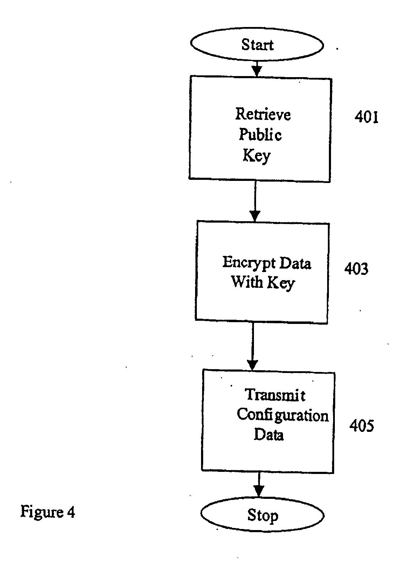

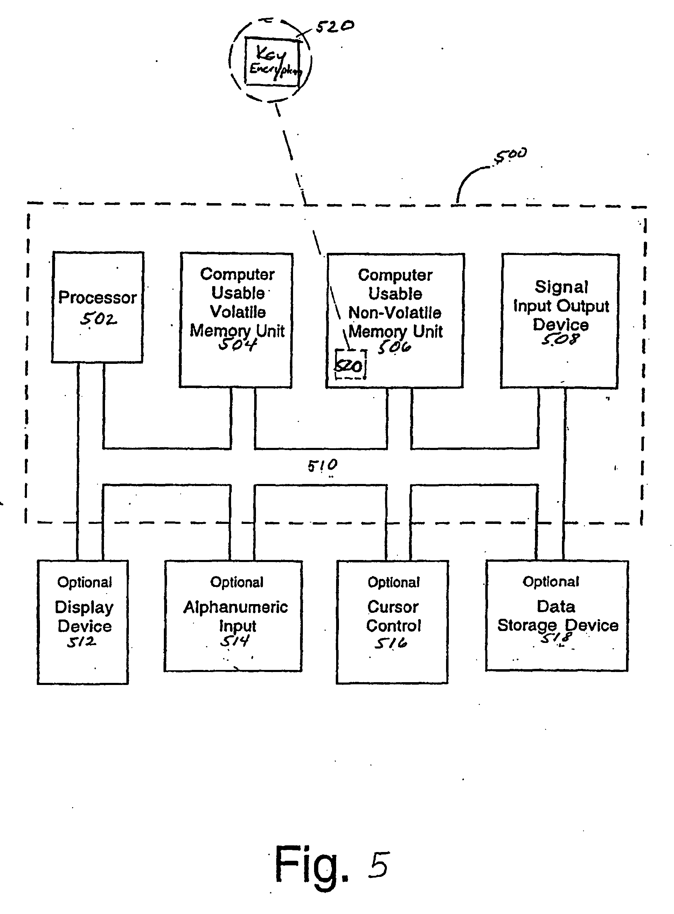

Figures 3 and 4 are flowcharts of computer implemented steps performed in accordance with one embodiment of the present invention for providing a secure logging scheme for intrusion detection. The flowcharts include processes of the present invention which are carried out by processors and electrical components under the control of computer readable and computer executable instructions. The computer readable and computer executable instructions reside, for example, in data storage features such as computer usable volatile memory and/or computer usable non-volatile memory (e.g. 504 and 506 described herein with reference to Figure 5). However, the computer readable and computer executable instructions may reside in any type of computer readable medium. Although specific steps are disclosed in the flowcharts, such steps are exemplary. That is, the present invention is well suited to performing various other steps or variations of the steps recited in Figures 2-4, and 6. Within the present embodiment, it should be appreciated that the steps of the flowcharts may be performed by software, by hardware or by any combination of software and hardware.

Figure 3 is a flowchart of steps performed by a security conscious network peripheral according to one embodiment of the present invention. At step 301, the security conscious network peripheral generates or creates a public/private key pair. According to one embodiment, this key pair may be generated automatically during the startup of the security conscious network peripheral.

At step 303, the security conscious SNMP makes the public key available to network management tools by exposing or transmitting the public key through an SNMP OID. According to one embodiment, this exposure of the public key accommodates the retrieval of the public key by network configuration managers. The key pair may then be transmitted to configuration managers in plain text.

At step 305, the security conscious network peripheral receives or accesses the encrypted configuration data from the remote SNMP tool. And, at step 307, the encrypted configuration data is decrypted with the private key of the security conscious network peripheral. According to one embodiment, the configuration data is encrypted using cipher text encryption.

At step 309, the network configuration data decrypted in step 307 is applied by the security conscious peripheral, and the peripheral is configured accordingly.

Figure 4 is a flowchart showing the steps performed by a remote SNMP tool according to one embodiment of the present invention. At step 401, the remote SNMP tool retrieves the public key in plain text from the security conscious network peripheral.

At step 403, the remote SNMP tool encrypts sensitive configuration data with the security conscious peripheral's public key (using cipher text encryption). And, at step 405, according to one embodiment, the encrypted cipher text configuration data is communicated to the security conscious network peripheral.

### EXEMPLARY HARDWARE IN ACCORDANCE WITH EMBODIMENTS OF THE PRESENT INVENTION

Figure 5 is a block diagram of an embodiment of an exemplary computer system 500 used in accordance with the present invention. It should be appreciated that system 500 is not strictly limited to be a computer system. As such, system 500 of the present embodiment is well suited to be any type of computing device (e.g., server computer, portable computing device, embedded computer system etc.). Within the following discussions of the present invention, certain processes and steps are discussed that are realized, in one embodiment, as a series of instructions (e.g., software program) that reside within computer readable memory units of computer system 500 and executed by a processor(s) of system 500. When executed, the instructions cause computer 500 to perform specific actions and exhibit specific behavior which is described in detail herein. Specifically, processes described herein, including the generation of a public/private key pair of a security conscious network peripheral, the encryption and decryption of data, etc. may be executed by a processor(s) of computer system 500. These processes may be realized, as instructions or code (e.g., software, firmware etc.) that reside within the readable memory units of computer system 500. When executed the instructions cause computer 500 to perform processes described herein such as the generation of a public/private key pair, the encryption and decryption of data, etc. Referring to Figure 5, in one embodiment, instructions such as encryption code may reside in readable memory unit 506 (see key encryption 520 shown in phantom). As previously mentioned, these instructions may be executed by processors of computer system 500.

Computer system 500 of Figure 5 comprises an address/data bus 510 for communicating information, one or more central processors 502 coupled with bus 510 for processing information and instructions. Central processor unit 502 may be a microprocessor or any other type of processor. The computer 500 also includes data storage features such as a computer usable volatile memory unit 504 (e.g., random access memory, static RAM, dynamic RAM, etc.) coupled with bus 510 for storing information and instructions for central processor(s) 502, a computer usable non-volatile memory unit 506 (e.g., read only memory, programmable ROM, flash memory, EPROM, EEPROM, etc.) coupled with bus 510 for storing static information and instructions for processor(s) 502. System 500 also includes one or more signal generating and receiving devices 508 coupled with bus 510 for enabling system 500 to interface with other electronic devices. The communication interface(s) 508 of the present embodiment may include wired and/or wireless communication technology. For example, in one embodiment of the present invention, the communication interface 508 is a serial communication port, but could also alternatively be any of a number of well known communication standards and protocols, e.g., Universal Serial Bus (USB), Ethernet, FireWire (IEEE 1394), parallel, small computer system interface (SCSI), infrared (IR) communication, Bluetooth wireless communication, broadband, and the like.

Optionally, computer system 500 can include an alphanumeric input device 514 including alphanumeric and function keys coupled to the bus 510 for communicating information and command selections to the central processor(s) 502. The computer 500 can include an optional cursor control or cursor directing device 516 coupled to the bus 510 for communicating user input information and command selections to the central processor(s) 502. The system 500 can also include a computer usable mass data storage device 518 such as a magnetic or optical disk and disk drive (e.g., hard drive or floppy diskette) coupled with bus 510 for storing information and instructions. An optional display device 512 is coupled to bus 510 of system 500 for displaying video and/or graphics.

As noted above with reference to exemplary embodiments thereof, the present invention provides a method and system for exchanging private data over an insecure network using public key encryption. The method and system provides for generating a public/private key pair of a network peripheral, exposing the public key of the network peripheral in a SNMP OID, receiving encrypted configuration data from a remote SNMP tool, decrypting configuration data with the private key of the network peripheral and applying decrypted network configuration data to configuration of the network peripheral. Moreover, the public key is exposed in plain text and the configuration data is received in cipher text.

## Claims

1. A method of exchanging private data over a wireless network using public key encryption comprising:
(301) generating a public/private key pair of a wireless network peripheral; **characterised by**:
(303) making available the public key of the wireless network peripheral via a network management protocol, wherein the public key is provided in plain text;
(305) receiving encrypted configuration data from a remote network management protocol tool, wherein the configuration data is provided in cipher text;
(307) decrypting configuration data with the private key of the wireless network peripheral; and
(309) applying decrypted network configuration data to the configuration of the wireless network peripheral.

2. The method of claim 1, wherein a remote SNMP, Simple Network Management Protocol tool, (103) retrieves the public key of the network peripheral in plain text.

3. The method of claim 2, wherein the remote SNMP tool (103) encrypts private data with the public key of the network peripheral.

4. The method of claim 3, wherein the remote SNMP (103) provides configuration data to the network peripheral in cipher text.

5. The method of claim 4, wherein the public key of the network peripheral is exposed to a plurality network configuration managers.

6. The method of claim 5, wherein data exchanges subsequent to an initial data exchange with network configuration managers are conducted in cipher text (113) instead of plain text.

7. The method of claim 6, wherein the SNMP management tool encrypts data payloads prior to any SNMPv1 or SNMPv2 configuration data exchanges.

8. The method of claim 7, wherein the generation of the public/private key pair is automatic.

9. The method of claim 8, wherein the data exchange (205) is accomplished wirelessly.

10. A computer program comprising computer program code means for performing all of the steps of any of claims 1 to 9 when said program is run on a computer.

## Patentansprüche

1. Ein Verfahren zum Austauschen privater Daten über ein drahtloses Netzwerk unter Verwendung einer Öffentlicher-Schlüssel-Verschlüsselung, das folgende Schritte umfasst:
(301) Erzeugen eines Öffentlicher/Privater-Schlüssel-Paars eines drahtlosen Netzwerkperipheriegeräts; **gekennzeichnet durch**:
(303) Verfügbarmachen des öffentlichen Schlüssels des drahtlosen Netzwerkperipheriegeräts über ein Netzwerkverwaltungsprotokoll, wobei der öffentliche Schlüssel in Klartext geliefert wird;
(305) Empfangen verschlüsselter Konfigurationsdaten von einem entfernten Netzwerkverwaltungsprotokolltool, wobei die Konfigurationsdaten in Geheimtext geliefert werden;
(307) Entschlüsseln von Konfigurationsdaten mit dem privaten Schlüssel des drahtlosen Netzwerkperipheriegeräts; und
(309) Anlegen entschlüsselter Netzwerkkonfigurationsdaten an die Konfiguration des drahtlosen Netzwerkperipheriegeräts.

2. Das Verfahren gemäß Anspruch 1, bei dem ein entferntes einfaches Netzwerkverwaltungsprotokoll-Tool, SNMP, (103) den öffentlichen Schlüssel des Netzwerkperipheriegeräts in Klartext empfängt.

3. Das Verfahren gemäß Anspruch 2, bei dem das entfernte SNMP-Tool (103) private Daten mit dem öffentlichen Schlüssel des Netzwerkperipheriegeräts verschlüsselt.

4. Das Verfahren gemäß Anspruch 3, bei dem das entfernte SNMP-Werkzeug (103) Konfigurationsdaten an das Netzwerkperipheriegerät in Geheimtext liefert.

5. Das Verfahren gemäß Anspruch 4, bei dem der öffentliche Schlüssel des Netzwerkperipheriegeräts einer Mehrzahl von Netzwerkkonfigurationsverwaltern offengelegt ist.

6. Das Verfahren gemäß Anspruch 5, bei dem Datenaustauschvorgänge nach einem Anfangsdatenaustausch mit Netzwerkkonfigurationsverwaltern in Geheimtext (113) anstatt in Klartext ausgeführt werden.

7. Das Verfahren gemäß Anspruch 6, bei dem das SNMP-Verwaltungstool Datennutzlasten vor jeglichen SNMPv1-oder SNMPv2-Konfigurationsdatenaustauschvorgängen verschlüsselt.

8. Das Verfahren gemäß Anspruch 7, bei dem die Erzeugung des Öffentlicher/Privater-Schlüssel-Paars automatisch ist.

9. Das Verfahren gemäß Anspruch 8, bei dem der Datenaustausch (205) drahtlos ausgeführt wird.

10. Ein Computerprogramm, das eine Computerprogrammcodeeinrichtung zum Durchführen aller Schritte gemäß einem der Ansprüche 1 bis 9 umfasst, wenn das Programm auf einem Computer läuft.

## Revendications

1. Procédé pour échanger des données privées sur un réseau sans fil utilisant un chiffrement à clé publique consistant à :
(301) générer une paire de clés publique/privée d'un périphérique de réseau sans fil; **caractérisé par**:
(303) rendre disponible la clé publique du périphérique de réseau sans fil via un protocole de gestion de réseau, dans lequel la clé publique est fournie en texte en clair ;
(305) recevoir des données de configuration chiffrées provenant d'un outil de protocole de gestion de réseau à distance, dans lequel les données de configuration sont fournies en texte chiffré ;
(307) déchiffrer les données de configuration avec la clé privée du périphérique de réseau sans fil ; et
(309) appliquer les données de configuration de réseau déchiffrées à la configuration du périphérique de réseau sans fil.

2. Procédé selon la revendication 1, dans lequel un protocole SNMP à distance, outil de protocole de gestion de réseau simple, (103) récupère la clé publique du périphérique de réseau en texte en clair.

3. Procédé selon la revendication 2, dans lequel l'outil de protocole SNMP à distance (103) chiffre des données privées avec la clé publique du périphérique de réseau.

4. Procédé selon la revendication 3, dans lequel le protocole SNMP à distance (103) fournit les données de configuration au périphérique de réseau en texte chiffré.

5. Procédé selon la revendication 4, dans lequel la clé publique du périphérique de réseau est exposée à une pluralité de gestionnaires de configuration de réseau.

6. Procédé selon la revendication 5, dans lequel des échanges de données successifs à un échange de données initial avec des gestionnaires de configuration de réseau sont menés en texte chiffré (113) à la place du texte en clair.

7. Procédé selon la revendication 6, dans lequel l'outil de gestion de protocole SNMP chiffre les charges utiles de données avant n'importe quels échanges de données de configuration de protocole SNMPv1 ou SNMPv2.

8. Procédé selon la revendication 7, dans lequel la génération de la paire de clés publique/privée est automatique.

9. Procédé selon la revendication 8, dans lequel l'échange de données (205) est accompli sans fil.

10. Programme d'ordinateur comprenant des moyens de code de programme d'ordinateur pour effectuer toutes les étapes de l'une quelconque des revendications 1 à 9 quand ledit programme est exécuté sur un ordinateur.
